# EUROPÄISCHE PATENTSCHRIFT

(11) **EP 1 336 779 B1**
(45) Veröffentlichungstag und Bekanntmachung des Hinweises auf die Patenterteilung: **29.09.2004**
(21) Anmeldenummer: 03001875.8
(22) Anmeldetag: 29.01.2003
(51) Int. Cl.: F16J 15/38, F16J 15/34

(54) **Sekundärdichtungselement für eine Gleitringdichtungsanordnung**
Secoundary sealing element for a mechanical seal
Elément d'étanchéité secondaire pour joint glissant

(30) Priorität: 14.02.2002 DE 20202179 U
(43) Veröffentlichungstag der Anmeldung: 20.08.2003
(73) Patentinhaber: Burgmann Dichtungswerke GmbH & Co. KG, 82515 Wolfratshausen (DE)
(72) Erfinder: Dechow, Frank, 67551 Worms (DE); Ongerth, Doris, 82538 Geretsried (DE); Ries, Wolfgang, 82438 Eschenlohe (DE); Sveijkovsky, Reinhard, 82538 Geretsried (DE); Watzinger, Stefan, 82538 Geretsried (DE); Woppowa, Robert, 82515 Wolfratshausen (DE)
(74) Vertreter: Schmidt, Horst, Dr.

(56) Entgegenhaltungen:
- DE-A- 4 311 547
- DE-C- 4 401 526
- FR-A- 1 295 755
- US-A- 4 364 571
- US-A- 5 462 289

## Beschreibung

Die Erfindung betrifft ein Sekundärdichtungselement für eine Gleitringdichtungsanordnung, insbesondere für steriltechnische Anwendungen. Sie betrifft insbesondere ein so genanntes dynamisches Sekundärdichtungselement. Ein derartiges Element ist aus dem Dokument DE-A-4 311 547 bekannt.

Bei steriltechnischen Anwendungen einer Gleitringdichtungsanordnung, z.B. für die Abdichtung einer Pumpe zur Förderung von flüssigen Nahrungsmitteln oder pharmazeutischen Substanzen, müssen Toträume und dgl. vermieden werden, in denen sich die Substanzen ansammeln und über längere Zeiten zurückgehalten werden können. Ferner muss die Gleitringdichtungsanordnung leicht gereinigt werden können und glatte abriebfeste Oberflächen aufweisen. Die grundlegenden Anforderungen bei steriltechnischen Anwendungen sind in den Standards der European Highgenic Engineering Design Group (EHEDG) zusammengefasst und müssen bei einer Gleitringdichtungsanordnung erfüllt sein, damit diese für den Einsatz bei steriltechnischen Anwendungen ein Zulassungszertifikat erhält. Ein kritisches Aufbaumerkmal von Gleitringdichtungsanordnungen sind die dynamischen Sekundärdichtungen zur Abdichtung gewisser beweglicher Bauteile der Gleitringdichtungsanordnung. Die dazu sich anbietenden O-Ringe sind bei steriltechnischen Anwendungen nachteilig, da sie aufgrund ihrer Querschnittskonfiguration und Anordnung in Montagenuten oder -ausnehmungen anfällig für die Bildung von Toträumen sind. Es wurde schon vorgeschlagen, statt O-Ringen ein Profil mit einer Vielzahl kammartig hintereinander angeordneter Dichtlippen vorzusehen, die von einem massiven, eine Montageausnehmung im betreffenden Bauteil gänzlich ausfüllenden Basiskörper abstehen. Diese Lösung hat gezeigt, dass die Reibkräfte zwischen der Sekundärdichtung und der damit zusammenwirkenden Oberfläche zu gross sind, so dass eine notwendige relative Beweglichkeit zwischen den in dichtender Beziehung miteinander stehenden Oberflächen stark beeinträchtigt wird. Bei Abstreifem für Gestänge ist es bekannt (DE-U-8225484, DE-A-2813163), an einem axialen Ende eines Basiskörpers eine lippenförmige Anformung vorzusehen, die in anliegendem Eingriff mit einer abzudichtenden Oberfläche einer Stange treten kann, während ein restlicher Bereich des inneren Umfanges des Abstreifers von der Oberfläche in Abstand gehalten ist. Die lippenförmige Anformung ragt axial über den Basiskörper um ein deutliches Mass hinaus und ist daher in ihrem radialen Verformungsverhalten weitgehend unbestimmt. Insbesondere erhält die lippenförmige Anformung praktisch keine Unterstützung seitens des Basiskörpers. Der bekannte Abstreifer ist als Sekundärdichtungselement einer Gleitringdichtungsanordnung nicht geeignet, da bei einer ausreichenden Bewegungsmöglichkeit der beweglichen Teile, insbesondere eines der Gleitringe der Gleitringdichtungsanordnung relativ zu einer abzudichtenden Oberfläche keine zuverlässige Dichtwirkung gewährleistet ist.

Der Erfindung liegt die Aufgabe zugrunde, ein dynamisches Sekundärdichtungselement der eingangs erwähnten Gattung zu schaffen, das die Anforderungen an eine zuverlässige totraumfreie Abdichtung bei gleichzeitig gewährleisteter ausreichender Relativbeweglichkeit der in dichtendem Eingriff miteinander stehenden Flächen erfüllt. Das Sekundärdichtungselement soll ferner in Bezug auf das betreffende Bauteil der Gleitringdichtungsanordnung auch unter Unterdruckbedingungen seinen vorgegebenen Sitz am Bauteil beibehalten.

Diese Aufgabe wird erfindungsgemäss durch die Merkmale des Anspruches 1 gelöst. Das Sekundärdichtungselement hat einen massiven Basiskörper mit einem inneren Umfangsbereich, der sich zwischen einer dichtlippenförmig ausgebildeten Dichtungsanformung nahe einem axialen Ende des massiven Basiskörper zu dessen gegenüberliegenden axialen Ende erstreckt und zylindrisch ausgebildet ist, so dass dieser Umfangsbereich eine konstante Durchmesserabmessung hat. Dadurch wird beim Einsatz des Sekundärdichtungselementes ein Spalt mit konstanter Spaltweite gebildet, der bei steriltechnischen Anwendungen gegenüber z.B. konischen Konfigurationen wegen der besseren Reinigungsmöglichkeit vorteilhaft ist. Die Dichtungsanformung ist ferner so ausgelegt, dass die axiale Abmessung der im Einsatz gebildeten Dichtungsfläche nicht mehr oder minder dem Zufall überlassen ist, sondern für einen bestimmten Nenndurchmesser des Sekundärdichtungselementes innerhalb eines bestimmten Verhältnisses in Bezug auf die axiale Gesamtlänge des Sekundärdichtungselementes steht, d.h. vorgegeben ist. Es wurde festgestellt, dass, wenn diese Vorgabe eingehalten wird, sowohl beim erstmaligen Einsatz als auch im Laufe der Betriebszeit der Gleitringdichtungsanordnung, gleichzeitig einerseits eine ausreichende Dichtwirkung gewährleistet ist und andererseits keine Reibkräfte auftreten, die eine Relativbewegung zwischen den betreffenden Flächen in unzulässiger Weise behindern würden. Gemäss einer Weiterbildung der Erfindung kann ferner vorgesehen sein, dass am äusseren Umfang des Sekundärdichtungselementes eine Durchmessererweiterung vorgesehen ist, die eine sichere Verankerung in einer entsprechend dimensionierten Montageausnehmung eines Bauteils ermöglicht. Diese Massnahme hat besondere Vorteile beim Einsatz des Sekundärdichtungselementes unter von aussen darauf einwirkenden Unterdruckkräften, indem dadurch verhindert wird, dass unter solchen Kräften das Sekundärdichtungselement aus der Montageausnehmung herausgezogen werden kann. Andere Weiterbildungen sind in den Unteransprüchen aufgeführt, auf die verwiesen wird.

Die Erfindung wird nachfolgend anhand einer Ausführungsform und der Zeichnung näher erläutert. Es zeigen:
Fig. 1 in längsgeschnittener fragmentarischer Ansicht eine Gleitringdichtungsanordnung mit einem Sekundärdichtungselement gemäss der Erfindung, dargestellt in Verbindung mit der Abdichtung einer Wellendurchtrittsöffnung in einem Gehäuse,
Fig. 2 in vergrössertem Massstab ein Detail X in Fig. 1 mit Darstellung des Sekundärdichtungselementes im Einbauzustand, und
Fig. 3 in geschnittener fragmentarischer Ansicht das Sekundärdichtungselement nach Fig. 1 und 2, dargestellt im Ausgangszustand vor Einbau.

Obschon ein Hauptanwendungsgebiet der Erfindung die Abdichtung einer Welle, z.B. der Laufradwelle einer Pumpe für die Förderung von Fluiden ist, bei denen besondere Anforderungen an die Sterilhaltung gestellt werden, ist die Erfindung auf dieses Anwendungsgebiet nicht beschränkt.

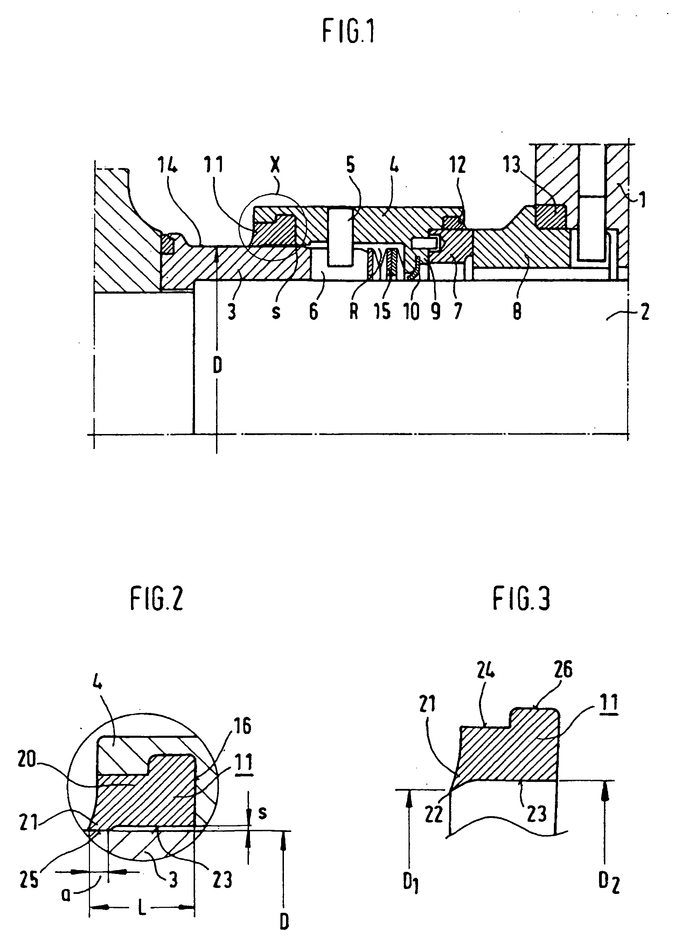

In Fig. 1 sind fragmentarisch ein Pumpengehäuse 1 und eine Welle 2 gezeigt, die sich durch eine Wellendurchtrittsbohrung des Gehäuses 1 nach aussen zu einer Antriebsquelle (nicht gezeigt) erstreckt. Auf der Welle 2 ist eine Buchse 3 angeordnet. Die Buchse 3 ist durch dem Fachmann bekannte Mittel axial lagemässig auf der Welle 2 zur gemeinsamen Drehung mit dieser fixiert. Auf dem äusseren Umfang 14 der Buchse 3 ist ein Mitnehmergehäuse 4 angeordnet, das in Gestalt eines Rohrabschnittes ausgebildet sein kann. Von einer axial zwischenliegenden Stelle des Mitnehmergehäuse 4 ragt radial nach innen ein Mitnehmerzapfen 5 ab, der in eine längliche Ausnehmung oder Nut 6 eingreift, die in einem benachbarten axialen Endbereich der Buchse 3 ausgebildet ist. Eine Drehbewegung der Buchse 3 wird daher über den Mitnehmerzapfen 5 auf das Mitnehmergehäuse 4 übertragen, wobei gleichzeitig die Verbindung zwischen dem Mitnehmerzapfen 5 und der länglichen Ausnehmung oder Nut 6 dafür sorgt, dass das Mitnehmergehäuse 4 relativ zur Buchse 3 axial beweglich ist.

Am Mitnehmergehäuse 4 ist nahe einem axialen Ende (in der Zeichnung rechtsseitigen axialen Ende) ein Gleitring 7 gehalten, der mit einem gegenüberliegenden Gleitring 8 zusammenwirkt, der durch ein Dichtungselement 13 gegenüber den Gehäuse 1 abgedichtet und am Gehäuse 1 stationär gehalten ist. Die Gleitringe 7, 8 haben zusammenwirkende radiale Dichtflächen, zwischen denen bei Betrieb ein Dichtspalt gebildet wird, um einen Raum aussenumfänglich der Gleitringe 7, 8 gegenüber einem Raum innenumfänglich der Gleitringe 7, 8 abzudichten. Wenn erwünscht, können förderwirksame Ausnehmungen in wenigstens einer der zusammenwirkenden Gleitflächen vorgesehen sein, um das abzudichtende Medium in den Bereich zwischen den Gleitflächen zu pumpen und dadurch die Dichtspaltbildung zu fördern.

Der Gleitring 7 ist zur gemeinsamen Drehung mit dem Mitnehmergehäuse 4 vorzugsweise in Lossitz gehalten. Dazu kann ein vom Mitnehmergehäuse 4 axial abstehender Mitnehmerzapfen vorgesehen sein, der in eine Ausnehmung des Gleitringes 7, wie dargestellt, eingreifen kann. An seinem äusseren Umfang ist der Gleitring 7 gegenüber dem Mitnehmergehäuse 4, wie bei 12 angedeutet ist, durch ein Sekundärdichtungselement abgedichtet. An einem radial nach innen nahe dem Gleitring 7 ragenden Ansatzbereich 9 des Mitnehmergehäuses 4 ist eine Dichtung 10 in Gestalt einer Ringscheibe aus einem elastischen Material wie Polytetrafluorethylen (PTFE) gehalten, die in dichtender Beziehung mit der äusseren Oberfläche der Welle 2 steht, um einen zwischem dem Mitnehmergehäuse 4 und der Oberfläche der Welle 2 radial begrenzten Federraum R abzudichten. Eine Vorspannfeder 15, bei der es sich um eine Tellerfeder handeln kann, ist im Federraum R angeordnet. Die Vorspannfeder 15 stützt sich mit einem axialen Ende am Ansatzbereich 9 des Mitnehmergehäuses 4 und mit dem anderen axialen Ende an der Buchse 3 ab.

Der Federraum R ist gegenüber der Aussenumgebung abgedichtet, so dass das abzudichtende Medium nicht in Berührung mit der Vorspannfeder 15, der Ausnehmung 6 und dem Mitnehmerbolzen 5, d.h. mit Teilen kommen kann, an denen sich das Medium ansammeln kann.

Zur Abdichtung des Mitnehmergehäuses 4 gegenüber der Buchse 3 ist ein Sekundärdichtungselement 11 vorgesehen, das im Detail in Fig. 2 und 3 gezeigt ist. Das Sekundärdichtungselement 11 umfasst einen vieleckförmigen massiven Basiskörper 20 mit gegenüberliegenden axialen Enden. Von einem axialen Ende des Basiskörpers 20 ragt eine Dichtungsanformung 21 nach innen ab, die einen im Wesentlichen dreieckförmigen Querschnitt haben kann und ein radial nach innen weisendes Spitzende 22 aufweist, das eine Durchtrittsöffnung für die Buchse 3 begrenzt. Die Dichtungsanformung 21 bildet daher eine Art Dichtlippe. Der Durchmesser D₁ der durch das Spitzende 22 definierten Durchtrittsöffnung ist um ein geeignetes Mass kleiner als der Aussendurchmesser D der Buchse 3, der dem Nenndurchmesser des Sekundärdichtungselementes 11 entspricht.

Wenn die Buchse 3 bei der Montage der Gleitringdichtungsanordnung durch das am Mitnehmergehäuse 4 gehaltene Sekundärdichtungselement 11 hindurchgeführt wird, erfährt die Dichtungsanformung 21 eine radiale Durchmessererweiterung, die eine Dichtfläche 25 mit einer bestimmten axialen Abmessung a (Fig. 2) bildet, längs der eine flächenmässige dichtende Beziehung zwischen der Dichtungsanformung 21 und der äusseren Umfangsoberfläche 14 der Buchse 3 zustande kommt. Das Verhältnis der Dichtfläche a zur gesamten axialen Abmessung L des Sekundärdichtungselementes liegt zwischen 0,1 und 0,5.

Erfindungsgemäss ist ferner ein innerer Umfangsbereich 23 des Sekundärdichtungselementes 11, der sich von der Dichtungsanformung 21 zum gegenüberliegenden axialen Ende des Sekundärdichtungselementes erstreckt, zylindrisch ausgebildet. Der Durchmesser des inneren Umfangsbereich 23 ist mit D₂ bezeichnet und kann längs der gesamten Länge des inneren Umfangsbereiches 23 konstant sein, so dass zwischen dem inneren Umfangsbereich 23 und der äusseren Umfangsfläche 14 der Buchse 3 ein Spalt mit einer konstanten Spaltweite s gebildet wird. Die Spaltweite s sollte zwischen etwa 0,1 und 1,5 mm betragen. Demzufolge ist der Durchmesser D₂ um das Mass 2s grösser als der Nenndurchmesser D. Im eingebauten Zustand des Sekundärdichtungselementes 11 gemäss Fig. 1 und 2 kann der Spalt am betreffenden axialen Ende des Basiskörpers 20 in den Federraum R ausmünden.

Das Sekundärdichtungselement 11 ist in einer Ausnehmung 16 im Mitnehmergehäuse 4 aufgenommen, die seitens des dem Gleitring 7 abgewandten axialen Endes in das Mitnehmergehäuse 4 eingebracht ist. Am äusseren Umfang 24 des Sekundärdichtungselementes 11 kann ein radial nach aussen vorstehender abgestufter Umfangsbereich 26 vorgesehen sein, der in eine entsprechend stufenförmig ausgebildete Erweiterung der Ausnehmung 16 des Mitnehmergehäuses 4 eingreifen kann, wie dies in Fig. 2 zeigt ist, um das Sekundärdichtungselement 11 in Bezug auf das Mitnehmergehäuse 11 lagemässig zu fixieren. Insbesondere wird hierdurch vermieden, dass bei einem aussenumfänglich des Mitnehmergehäuses 4 anstehenden Unterdruck das Sekundärdichtungselement 11 aus der Eingriffnahme mit dem Mitnehmergehäuse 4 herausgezogen werden kann.

Obschon andere geeignete elastische Materialien vorgesehen werden können, ist ein bevorzugtes Material für das Sekundärdichtungselement 11 ein gummielastisches Material, wie ein Elastomer.

Für die Abdichtung des Gleitringes 7 gegenüber dem Mitnehmergehäuse 4 ist das Sekundärdichtungselement 12 vorgesehen, das einen ähnlichen Aufbau wie das Sekundärdichtungselement 11 haben kann. Details des Sekundärdichtungselementes 12 brauchen deshalb nicht erneut beschrieben werden.

Durch die erfindungsgemässen Massnahmen wird erreicht, dass die Abdichtung des Mitnehmergehäuses 4 gegenüber der Buchse 3 einerseits sowie dem Gleitring 7 andererseits ohne die bislang verwendeten O-Ringe erfolgen kann und damit die mit O-Ringen verbundenen Toträume, in denen sich das abzudichtende Medium ansammeln kann, wirksam vermieden werden. Die Dichtungsanformung 21 schafft im Zusammenwirken mit einem Freispalt von geeigneter konstanter Spaltweite zwischen dem inneren Umfangsbereich 23 des Sekundärdichtungselementes 11 und der äusseren Oberfläche 14 des rotierenden Bauteils eine wirksame Abdichtung, ohne dass dadurch die axiale Beweglichkeit des Mitnehmergehäuses 4 in unzulässiger Weise beeinträchtigt wird.

Die Erfindung wurde vorausgehend anhand einer Gleitringdichtungsanordnung beschrieben, bei der das rotierende Bauteil eine auf einer Welle aufgesetzte Buchse ist. Es versteht sich, dass die Buchse auch weggelassen werden könnte und statt dessen das Mitnehmergehäuse mit einem erweiterten Bereich der Welle zusammenwirken und in anderer Weise als durch eine Mitnehmerbolzenanordnung in einer drehfesten Beziehung dazu gehalten sein könnte. Ferner braucht der innere Umfangsbereich 23 des Sekundärdichtungselementes nicht längs dessen gesamter axialer Länge zylindrisch ausgebildet sein, sofern wenigstens ein ausreichend axial bemessener Bereich nahe der Dichtungsanformung 21 diese Ausgestaltung aufweist.

## Patentansprüche

1. Sekundärdichtungselement für eine Gleitringdichtungsanordnung, insbesondere für steriltechnische Anwendungen, mit einem ringförmigen Basiskörper (20) mit gegenüberliegenden axialen Enden, wobei nahe einem axialen Ende eine dichtlippenförmig ausgebildete Dichtungsanformung (21) mit einem radial nach innen weisenden Spitzende (22) vorgesehen ist, das eine Durchtrittsöffnung mit einem Durchmesser D₁ kleiner als ein Nenndurchmesser D des Sekundärdichtungselementes und grösser als ein Durchmesser D₂ eines inneren Umfangsbereiches (23) definiert, der sich zwischen der Dichtungsanformung und dem anderen axialen Ende des Basiskörpers erstreckt und wenigstens längs eines axialen Abschnitts nahe der Dichtungsanformung (21) zylindrisch ausgebildet ist, so dass beim Einsatz des Sekundärdichtungselementes wenigstens zwischen dem axialen Abschnitt und einer mit der Dichtungsanformung (21) zusammenwirkenden Umfangsfläche (14) eines Bauteils ein Spalt mit einer konstanten Spaltweite s gebildet ist, **dadurch gekennzeichnet, dass** die Dichtungsanformung (21) ausgelegt ist, dass das Spitzende (22) bei einer Verformung auf den Nenndurchmesser D eine Dichtfläche (25) mit einer axialen Länge (a) bildet, die in einem Verhältnis zwischen 0,1 und 0,5 zur axialen Gesamtlänge (L) des Sekundardichtungselementes steht.

2. Sekundärdichtungselement nach Anspruch 1, **dadurch gekennzeichnet, dass** dieses aussenumfänglich von einem Umfangsbereich (24) mit geringem Durchmesser zu einem Umfangsbereich (26) nahe dem anderen axialen Ende mit grösserem Durchmesser, vorzugsweise stufenförmig, erweitert ist.

3. Sekundärdichtungselement nach Anspruch 1 oder 2, **dadurch gekennzeichnet, dass** die Dichtungsanformung (21) einen im Wesentlichen dreieckförmigen Querschnitt hat.

4. Sekundärdichtungselement nach einem der vorhergehenden Ansprüche, **dadurch gekennzeichnet, dass** dieses aus einem elastomeren Material gebildet ist.

5. Sekundärdichtungselement nach Anspruch 1, **dadurch gekennzeichnet, dass** der Durchmesser D₂ des inneren Umfangsbereichs (23) um ein Mass 2s mit s = 0,1 bis 1,5 mm grösser als der Nenndurchmesser D ist.

## Claims

1. A secondary seal element for a face seal assembly, especially for use in sterile applications, comprising a ring-like base body (20) having opposite axial ends, in which a lip-like sealing formation (21) having a radially inwardly directed end tip (22) is provided near one axial end, said end tip defining a passage opening having a diameter D₁ smaller than a nominal diameter D of the secondary seal element and larger than a diameter D₂ of an inner peripheral portion (23) extending between the sealing formation and the other axial end of the base body and being cylindrical in shape at least along an axial section close to the sealing formation (21) so that, when the secondary seal element is in use, a gap of constant gap-width s is formed at least between said axial section and a peripheral surface (14) of a component cooperating with said sealing formation (21), **characterised in that** said sealing formation (21) is designed such that, siad end tip (22) when deformed to the nominal diameter D, forms a seal face (25) having an axial length (a) which has a ratio of between 0.1 and 0.5 to the overall axial length (L) of the secondary seal element.

2. The secondary seal element according to claim 1, **characterised in that** at the external periphery thereof it is expanded, preferably in step-like manner, from a peripheral portion (24) of small diameter to a peripheral portion (26) of larger diameter near the other axial end.

3. The secondary seal element according to claim 1 or 2, **characterised in that** said sealing formation (21) has an essentially triangular cross section.

4. The secondary seal element according to anyone of the preceding claims, **characterised in that** it is formed of an elastomeric material.

5. The secondary seal element according to claim 1, **characterised in that** that the diameter D₂ of said inner peripheral portion (23) is larger than the nominal diameter D by an amount 2 s where s = 0.1 to 1.5 mm.

## Revendications

1. Elément d'étanchéité secondaire pour un agencement de joint glissant, en particulier pour des utilisations en technique aseptique, avec un corps de base annulaire (20) présentant des extrémités axiales opposées, un modelage de joint (21) conçu en forme de lèvre d'étanchéité avec une extrémité en pointe (22) orientée radialement vers l'intérieur étant prévu à proximité d'une extrémité axiale, laquelle extrémité définit une ouverture de passage présentant un diamètre D₁ inférieur à un diamètre nominal D de l'élément d'étanchéité secondaire et supérieur à un diamètre D₂ d'une zone périphérique interne (23), qui s'étend entre le modelage de joint et l'autre extrémité axiale du corps de base et qui est conçue de manière cylindrique au moins le long d'une section axiale à proximité du modelage de joint (21), de sorte qu'à l'insertion de l'élément d'étanchéité secondaire, une fente présentant une largeur de fente s constante soit formée au moins entre la section axiale et une surface périphérique (14) d'un composant coopérant avec le modelage de joint (21), **caractérisé en ce que** le modelage de joint (21) est dimensionné pour que l'extrémité en pointe (22) forme dans le cas d'un façonnage au diamètre nominal D une surface d'étanchéité (25) présentant une longueur axiale (a), qui se situe dans un rapport entre 0,1 et 0,5 par rapport à la longueur totale axiale (L) de l'élément d'étanchéité secondaire.

2. Elément d'étanchéité secondaire selon la revendication 1, **caractérisé en ce que** celui-ci est élargi sur la périphérie externe depuis une zone périphérique (24) présentant un diamètre réduit vers une zone périphérique (26) à proximité de l'autre extrémité axiale présentant un plus grand diamètre, de préférence de façon échelonnée.

3. Elément d'étanchéité secondaire selon la revendication 1 ou 2, **caractérisé en ce que** le modelage de joint (21) présente une section sensiblement triangulaire.

4. Elément d'étanchéité secondaire selon l'une des revendications précédentes, **caractérisé en ce que** celui-ci est formé à partir d'un matériau élastomère.

5. Elément d'étanchéité secondaire selon la revendication 1, **caractérisé en ce que** le diamètre D₂ de la zone périphérique interne (23) est supérieur au diamètre nominal D d'une mesure 2s avec s=0,1 à 1,5 mm.
